# EUROPEAN PATENT APPLICATION

(11) **EP 4 838 405 A1**
(43) Date of publication of application: **11.11.2026**
(21) Application number: 25174506.3
(22) Date of filing: 06.05.2025
(51) Int. Cl.: G06F 40/35, G09B 7/02, G09B 19/04

(54) **ASSESSMENT OF A USER INPUT IN RESPECT TO AN INFORMATION ON A DOMAIN AND A CONVERSATION GUIDELINE**

(71) Applicant: Siemens Aktiengesellschaft, 80333 München (DE)
(72) Inventor: Gerlach, Joachim, 14055 Berlin (DE); Johnson, Rebecca, 81739 München (DE); Librandi, Sandra, 91207 Lauf (DE); Tewari, Prabhav, 560100 Bengaluru (IN); Traub, Daniel, 81669 München (DE); Zabigailo, Maryna, 80797 München (DE)
(74) Representative: Siemens Patent Attorneys

(57) **Abstract**

The disclosure relates to an automated method for generating a report based on an assessment of a user input, the method comprising the steps:
- Configuring (S1) a digital model for a virtual person based on a configuration protocol by a first large language model,
wherein the configuration protocol comprises:
∘ an information on a domain and
∘ a conversation guideline,

- generating (S2) a representation comprising the virtual person based on the digital model,
- receiving (S3) a user input comprising a statement,
- performing an assessment (S6) of the statement in respect to configuration protocol,
- generating (S7) a report based on a result of the assessment, and
- outputting (S8) the report.

Further a computer program product, a computer-readable storage medium, and a system are disclosed.

## Description

Independent of the grammatical term usage, individuals with male, female or other gender identities are included within the term.

### Field of the Invention

The embodiments disclosed herein relate an automated method for generating a report based on an assessment of a user input. Further a computer program product, a computer-readable storage medium, and a system are disclosed.

### Background of the Invention

Training material for soft skill related trainings, especially communication training, conversation training, pitch training and feedback training and interpersonal interaction training, is of limited availability.

Methods for quantitative automatic computer-implemented capturing and assessing of a communication skill are not available.

In current state of art, assessments or actual tests are performed by teachers or trainers. Any legal & compliance unit or workers council demands a clear, transparent assessment concept. Up to now, a large language model cannot decide whether a pitch is good, and weather a user can pass a training. Large language models are not used for training, evaluation, and assessment purposes. One, reason is that a user who would be graded by a large language model would have to understand how the grade was chosen, e.g. the grading has to be transparent to the user.

Accordingly, there is a need for a training and a quantitative assessment of a communication skill, a hold presentation, and especially a pitch.

### Summary

Embodiments herein generally relate to a method for generating a report based on an assessment of a user input.

In one embodiment, the method including the steps of:
- Configuring (S1) a digital model for a virtual person based on a configuration protocol by a first large language model,
   wherein the configuration protocol comprises:
   o an information on a domain (the information of the domain comprises facts about the domain and/or knowledge about the domain, the information on the domain is especially divided into categories especially depending on the content) and
   o a conversation guideline (the conversation guideline comprises especially options of framing and/or options of forms (e.g. according to "Made-to-Stick" approach) of the statement),

   - generating (S2) a representation comprising the virtual person based on the digital model, wherein the representation especially includes a behavioural pattern comprising the virtual person based on the configuration protocol, a configured 3D model, a customized voice, a tailored 3D environment, and/or a specified LLM instruction
   - receiving (S3) a user input comprising a statement,
      wherein the user input originates from a user. The user being especially a real person.
   - performing an assessment (S6) of the statement in respect to configuration protocol,
   - generating (S7) a report based on a result of the assessment, and
   - outputting (S8) the report.

Some further details on the information on a domain include:

### Before interaction:

Before the interaction begins, these categories are pre-defined and stored in the backend. When the instruction prompt is activated, the large language model (LLM) can pull relevant information (e.g. questions, answers, context) from the attached documents, ensuring that it addresses the appropriate category.

### During interaction:

Large language models (LLMs) use the categories to rotate between topics, ensuring a smooth flow of conversation. Once one category is addressed, the next category is introduced in subsequent questions. This mechanism helps to gather knowledge across different areas, prevents repetition, and ensures the conversation remains vivid while covering various facets of Siemens Xcelerator comprehensively.

### Customer value:

This principle can be adapted to suit any subject matter, offering a structured way to explore diverse topics without redundancy.

### Type of categories:

These categories are designed to address different areas of the Siemens Xcelerator platform and its offerings, with a mechanism that rotates through topics to maintain a dynamic conversation and reduce question repetition:
General (G): This category focuses on broad, overarching questions about Siemens Xcelerator, including its mission, vision, goals, and general structure. It serves to provide an overall understanding of the platform.
Portfolio (P): The Portfolio category covers the range of products, software, and solutions within Siemens Xcelerator. It focuses on the specific tools and technologies offered across various industries, such as product lifecycle management and digitalization.
Ecosystem (E): The Ecosystem category addresses how Siemens Xcelerator interacts with other platforms, partners, and external technologies, exploring its integration within a larger digital ecosystem.
Marketplace (M): This category deals with how Siemens Xcelerator is accessed and engaged with in the marketplace, including licensing models, subscription services, and user engagement.
Sales (S): This category focuses on how Siemens Xcelerator is marketed and sold, highlighting its value proposition, competitive advantages, and the sales process.

### "Made to Stick" principle:

The "Made to Stick" principle, inspired by the book Made to Stick: Why Some Ideas Survive and Others Die by Chip Heath and Dan Heath, focuses on making ideas memorable, impactful, and easily understood. The principle is based on six key elements known as SUCCESs:
- Simple: Find the core message that is essential, stripping away unnecessary complexity.
- Unexpected: Capture attention by surprising the audience and breaking their patterns of thought.
- Concrete: Use clear, tangible details that help make ideas easier to grasp and visualize.
- Credible: Build trust by providing evidence, statistics, or authoritative sources.
- Emotional: Appeal to feelings, as emotions drive decision-making and retention.
- Stories: Use storytelling to make the message resonate and be more memorable.

### Evaluation:

- To evaluate a conversation according to the Made to Stick principle, the LLM can assess its responses using the six core elements of SUCCESs (Simple, Unexpected, Concrete, Credible, Emotional, Stories) and adjust the conversation flow accordingly. The LLM can evaluate the user's input in the following way:
   - Simple: The LLM checks whether the response conveys the core message clearly and concisely, focusing on the essential idea. It ensures that the response is not overly complex or filled with unnecessary details, making it easy to understand.
   - Unexpected: The LLM evaluates whether the response introduces something surprising or novel, capturing the attention. It considers if the response offers an unexpected twist to keep the conversation engaging.
   - Concrete: The LLM assesses whether the response includes tangible and clear details. It evaluates if the information is grounded in specific, real-world examples or data, making it easier for the user to grasp and relate to.
   - Credible: The LLM checks whether the response builds trust by providing reliable, verifiable sources or evidence. It ensures the information presented is supported by credible references or authority, strengthening its trustworthiness.
   - Emotional: The LLM assesses whether the response taps into the user's emotions. It evaluates if the message evokes feelings that make the user care about the information, enhancing engagement and making the content more memorable.
   - Stories: The LLM evaluates whether the response includes a narrative or story that makes the message more relatable and memorable. It considers if the response uses an example or scenario to illustrate the idea and help the user connect with the content on a deeper level.

### Customer value:

This mechanism allows for consistent evaluation and improvement of any pitch or proposal, ensuring that it resonates with the target audience, holds their attention, and delivers information in a way that is easy to grasp and compelling. The approach is adaptable and can be used across various industries, contexts, and communication strategies to enhance the impact of the message.

According to the embodiments a large language model is enabled to (transparently to the user):
- assess a training conversation and/or
- allocate points and/or
- decide whether the user can pass the training and/or
- evaluate conversation based on the configured criteria (e.g. Made-to-Stick rules, usage of keywords, communication style, performance).

This has the advantage that not only is the training completely generated by a large language model but also a personalized, comprehensible assessment and grading.

In a further embodiment the method comprises the further steps of:
- forwarding (S4) the statement to a second large language model,
   wherein the second large language model is arranged to perform an analysis of the statement in respect to the information on a domain,
   and wherein the second large language model is arranged to configure a reply and/or a question based on a result of the analysis, and
- outputting (S5) the reply and/or the question via the virtual person. The output includes interface output (e.g., animations), audio output (e.g., voice messages), and textual output (e.g., chat interface).

In a further embodiment the assessment (S6) is performed by a third large language model, wherein the third large language model is arranged to assess the statement in respect to the configuration protocol and wherein the third large language model is arranged to generate (S7) the report based on a result of the assessment.

As an embodiment, for the second large language model, instead of using a different large language (LLM) model, the first large language model and/or the third large language model (described below) are used again. This means that using only one large language model for the disclosed method and all its embodiments is possible (but not necessary). In this embodiment the first large language model, the second large language model, and the third large language model are identical and only on entity. The second large language model is also to be understand as a progression (ongoing development) of the first large language model, e.g. the first large language model is trained and amended during the simulation (execution of the disclosed method) and the second large language model is created. E.g. there is a change in the first large language model over, this is described by using the term "second large language model". The same applies for the third language model in relation to the first and/or the second large language model, respectively.

In this embodiment the same (identical) LLM is used during the whole method, so there is one LLM and the prompt several times inject.

In a further embodiment the method comprises the further steps of:
- outputting (S0):
   o a briefing information, the briefing information comprising an information regarding a conversation topic, the conversation topic being defined by the conversation domain and/or
   o an information about the virtual person according to the conversation protocol and/or
   o an instruction in respect to the conversation guideline.

In a further embodiment the representation further includes:
- an environment in which the virtual person is represented,
- a background sound, which is played addition (in the background) of a voice output of the virtual person.

In a further embodiment the configuration protocol further comprises:
- a definition of a personal characteristic
- a communication skill, and/or
- a social skill, and/or
- an interaction skill, and/or
- a mindset parameter, and/or
- a relationship type with the user, and/or
- a duration they have known the user, and/or
- a power balance to the user and/or
- a profession, and/or
- a position within a hierarchy, and/or
- a role within an organization, and/or
- an emotional parameter
each of the virtual person.

In a further embodiment the statement is arranged as several (at least two) statements.

According to this embodiment within the step of receiving the user input comprising the statement, several (at least two) statements are received. Theses several statements are used in the subsequent steps, where the statement is used. This embodiment can also be understood as the user input is repeated for a user input comprising a further statement.

In a further embodiment:
- the configuration protocol, and/or
- the domain, and/or
- the conversation guideline
are received and/or loaded:
- from a database, especially with a corresponding user profile and/or
- via a user interface.

In a further embodiment the configuration protocol further comprises:
- a ruleset (the ruleset being arranged to be used for performing the assessment of the statement, e.g. the ruleset defines which content and/or which covering of a category of content and/or which framing and/or which form (e.g. according to "Made-to-Stick" approach) of the statement is to be positive assessed and which is negative assessed), e.g. the ruleset defines rules for assessing the statement),
- a point system (the point system being arranged to be used for generating the result of the assessment, e.g. the point system defines a grading of the statement).

The ruleset and the point system are used to assess the statement and to generate the report based on a result of the assessment, each by the third large language model.

Exemplary categories for evaluation using the point system:

### Pitch (Up to 2.5 Points)

The "Pitch" category assesses how effectively the user communicates the core message. This includes:
- Clarity: Is the message clear and easily understood? Does the user avoid excessive jargon or complex wording?
- Relevance: How closely does the pitch align with the user's business and objectives? Is the user's message tailored to the context?
- Conciseness: Is the pitch structured in a way that stays within the time limit (2 minutes) without feeling rushed or missing key points?
- Narrative: Does the user present a clear story or vision that engages the audience?
- Points are awarded based on:
- 2.0-2.5 Points: Clear, concise, and well-structured pitch with a strong narrative.
- 1.0-1.9 Points: The pitch communicates the core message but may lack clarity, have some irrelevant points, or need tightening.
- 0.0-0.9 Points: The pitch is unclear, unfocused, or too detailed for the time limit, lacking a strong connection to the core message.

### Keywords (Up to 2.5 Points)

The "Keywords" category evaluates the user's ability to integrate the core business concepts (referred to as "pillars") and related terms into the pitch. This includes:
- Proper Use of Core Keywords: Did the user mention terms like "portfolio," "ecosystem," and "marketplace" effectively and in the right context?
- Secondary Keywords: Did the user touch on related terms like "as-a-service," "scalable," or "go-to-place" as appropriate, linking these ideas to the main concepts?

Points are awarded based on:
- 2.0-2.5 Points: Properly integrates core keywords and relevant secondary keywords, with clear context and correlation.
- 1.0-1.9 Points: Keywords are mentioned but not fully explored or aren't well connected to the overall message.
- 0.0-0.9 Points: Keywords are missing, misused, or not relevant to the pitch.

### Communication (Up to 2.5 Points)

This category looks at the user's communication style, tone, and ability to engage the audience. It includes:
- Enthusiasm: Does the user display passion or excitement for the subject matter?
- Engagement: Does the tone hold the audience's attention and create a connection with the topic?
- Appropriateness: Is the communication style appropriate for the context and audience? Does it feel genuine or forced?

Points are awarded based on:
- 2.0-2.5 Points: Enthusiastic, engaging, and appropriate communication style that builds rapport.
- 1.0-1.9 Points: Some enthusiasm, but could be more engaging or need improvement in tone.
- 0.0-0.9 Points: Lacking enthusiasm or engagement, making it harder to connect with the audience.

### Performance (Up to 2.5 Points)

The "Performance" category evaluates the overall effectiveness of the user's pitch in terms of combining all the aspects above:
- Overall Impact: Does the pitch leave a strong, lasting impression? Is the performance engaging, well-rounded, and effective in delivering the core message?

Flow and Coherence: Is there smooth flow from one point to the next? Does the user build upon the ideas effectively, making the pitch coherent and convincing?

Points are awarded based on:
- 2.0-2.5 Points: Strong overall performance that successfully combines clarity, keywords, communication, and flow.
- 1.0-1.9 Points: Decent performance, but with room for improvement in one or more areas (clarity, tone, or structure).
- 0.0-0.9 Points: Weak performance that lacks coherence, engagement, or effective communication of key messages.

In a further embodiment the statement is arranged as:
- a pitch, and/or
- a presentation, and/or
- a talk.

In a further embodiment the method comprises the further step of:
- generating (S8) a subsequent representation (especially of the virtual person in a virtual environment) based on the assessment (S6) of the statement.

If the statement is assessed well, the user moves on to a next level, which is a follow up conversation with the virtual person, especially in another virtual environment, e.g. in the foyer of the floor where the user and virtual person exited the elevator.

In a further embodiment the information on the domain is divided into categories especially depending on the content.

This has the advantage that the assessment is especially further dependent on a covering of the categories.

In a further embodiment a computer program product is disclosed. The computer program product comprising instructions which, when the program is executed by the computational device, cause the computational device to carry out the steps of the method according to this disclosure, is disclosed.

In a further embodiment a computer-readable storage medium is disclosed. The computer-readable storage medium comprising instructions which, when executed by the computational device, cause the computational device to carry out the steps of the method according to this disclosure, is disclosed.

In a further embodiment a system for generating a report based on an assessment of a user input, is disclosed. The system comprising a computational device and an output device, wherein the system comprises a computer program product according to this disclosure and/or a computer-readable storage medium according to this disclosure.

Between and during the steps of the method cloud technologies to support storage and data transfer are used.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

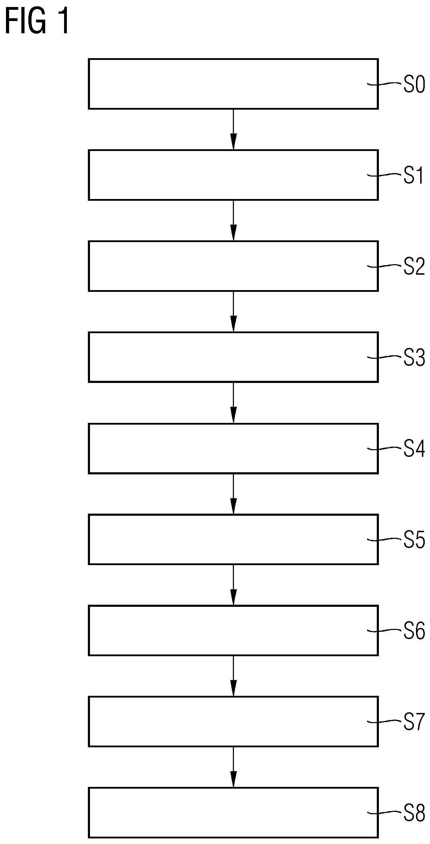

Fig. 1 shows a flow diagram of a method according to the invention.

### Detailed Description of the Drawings

Fig. 1 shows a flow diagram of an automated method for generating a report based on an assessment of a user input. The method comprising the steps:
- Step S0: outputting:
   o a briefing information, the briefing information comprising an information regarding a conversation topic, the conversation topic being defined by the conversation domain and/or
   o an information about the virtual person according to the conversation protocol and/or
- an instruction in respect to the conversation guideline
- Step S1: Configuring a digital model for a virtual person based on a configuration protocol by a first large language model,
   wherein the configuration protocol comprises:
   o an information on a domain (the information of the domain comprises facts about the domain and/or knowledge about the domain, the information on the domain is especially divided into categories especially depending on the content) and
   o a conversation guideline (the conversation guideline comprises especially options of framing and/or options of forms (e.g. according to "Made-to-Stick" approach) of the statement),
- Step S2: generating a representation comprising the virtual person based on the digital model,
- Step S3: receiving a user input comprising a statement,
   wherein the user input originates from a user, the user being especially a real person,
- Step S4: forwarding the statement to a second large language model,
   wherein the second large language model is arranged to perform an analysis of the statement in respect to the information on a domain,
   and wherein the second large language model is arranged to configure a reply and/or a question based on a result of the analysis,
- Step S5: outputting the reply and/or the question via the virtual person,
- Step S6: performing an assessment of the statement in respect to configuration protocol,
   wherein the assessment S6 is performed by a third large language model,
   wherein the third large language model is arranged to assess the statement in respect to the configuration protocol
- and wherein the third large language model is arranged to generate S7 a report based on a result of the assessment,
- Step S7: generating the report based on a result of the assessment, and
- Step S8: outputting the report.

In an advantageous embodiment, an elevator pitch training is described. The user opens a virtual environment in his browser and finds himself in an elevator with a virtual person. The user has 90 seconds to pitch a product, e.g. Siemens Xcelerator, to the virtual person.

This is the first "level" of the training. If the pitch is well performed, the user moves on to the next level, which is a follow up conversation with the virtual person in the foyer of the floor where the user and virtual person exited the elevator.

In a first level the user pitches the product to the virtual person. Prompt no 1 prepares the large language model to represent the virtual person, "Alex Taylor", a businessman who has heard of the product, recognizes the user and asks for information on the Siemens Xcelerator product. The prompt also points at a sheet/document filled with information, description and/or questions and answers (FAQs) on the product, sorted into several categories.

The user can now recite his pitch. If he is finished before the 90 seconds have run out, the large language model will check whether all categories were equally covered and if not, will choose a category to query the user on until the time is up.

The prompt #2 evaluates a summarized conversation based on specific criteria. The assistant checks if the user mentions "digital business platform" and includes at least 2 of the 3 main keywords (portfolio, ecosystem, marketplace) as well as 2 of the corresponding secondary keywords. The user must also highlight how Xcelerator benefits companies in the energy industry. If all these conditions are met, the result is "Pass"; otherwise, it is "Fail". If the result is "Pass", the user will be redirected to the second level of the training. If the result is "Fail", the user will have to repeat the first level of the training.

Prompt no 3 will now assess the whole conversation (Pitch + Follow Up questions). For this it is told to use the "Made-to-Stick" pitching guidelines.
- It will check again how well the content categories were covered and give points for each content category (an example for possible content and categories is given in table 2).
- It will also give points on the delivery of the pitch however, using the "Made-to-Stick" guidelines.

It can therefore transparently display to the user, by what criteria the pitch was assessed and how the grading came together. An example of how the assessment is performed is given in table 1.

Prompt #4 analyzes the user's responses and organizes the upcoming questions in Level 2 based on the frequency of discussion. The ranking is done as follows:
- The first element in the list corresponds to the question that was least discussed or mentioned by the user.
- The last element in the list corresponds to the question that was most discussed or mentioned by the user.

This process creates a prioritized array of questions for Level 2, with the least discussed question appearing first, followed by the progressively more discussed questions.

This ranking ensures that the questions are presented in a logical order, starting with those that require more attention or exploration.

Once the Prompt #4 is executed, the large language model is all set for the follow-up sequence in the foyer, using dynamically generated briefings from the pitch scene. The virtual person will now interrogate the user (e.g. ask, frame questions to the user) using questions from the excel that weren't covered in the earlier pitch. Again, the interrogation is timeboxed. The user does not receive immediate feedback on the accuracy of his answers. The large language model checks whether the user's answer is an actual answer to the question, a request to repeat the question ("pardon?") or a change of topic ("what time is it?"). It will only collect the actual answers of the user for a further assessment phase. An example of how the further assessment phase is performed is given in table 1.

The prompt #5 is similar to prompt #1, but includes different details such as the specific situation (e.g. continuing conversation after leaving the elevator) and location (e.g. the conference hall.

The prompt #6 is designed to evaluate the user's answers against the listed answers. The LLM compares the provided answer to a reference answer, determining if they align in content, accuracy, and relevance. The LLM then responds with either "Pass" or "Fail," followed by feedback. If the answer passes, the response includes appreciation. If it fails, the response gives a short suggestion for improvement.

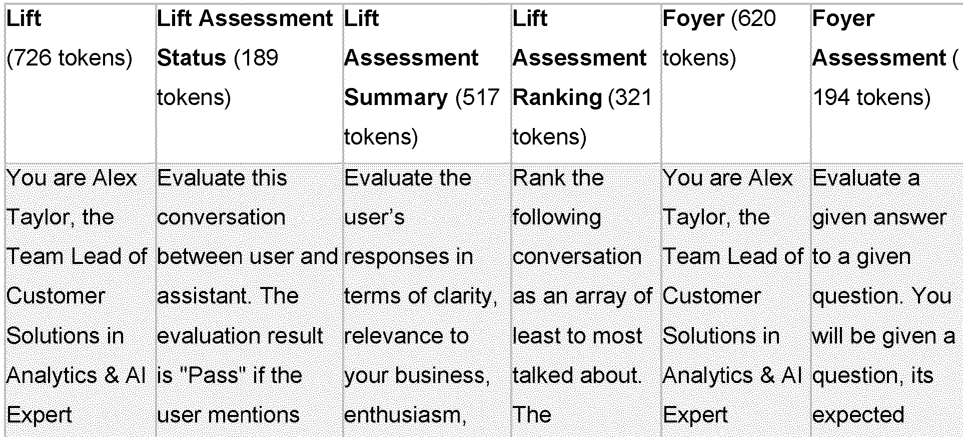

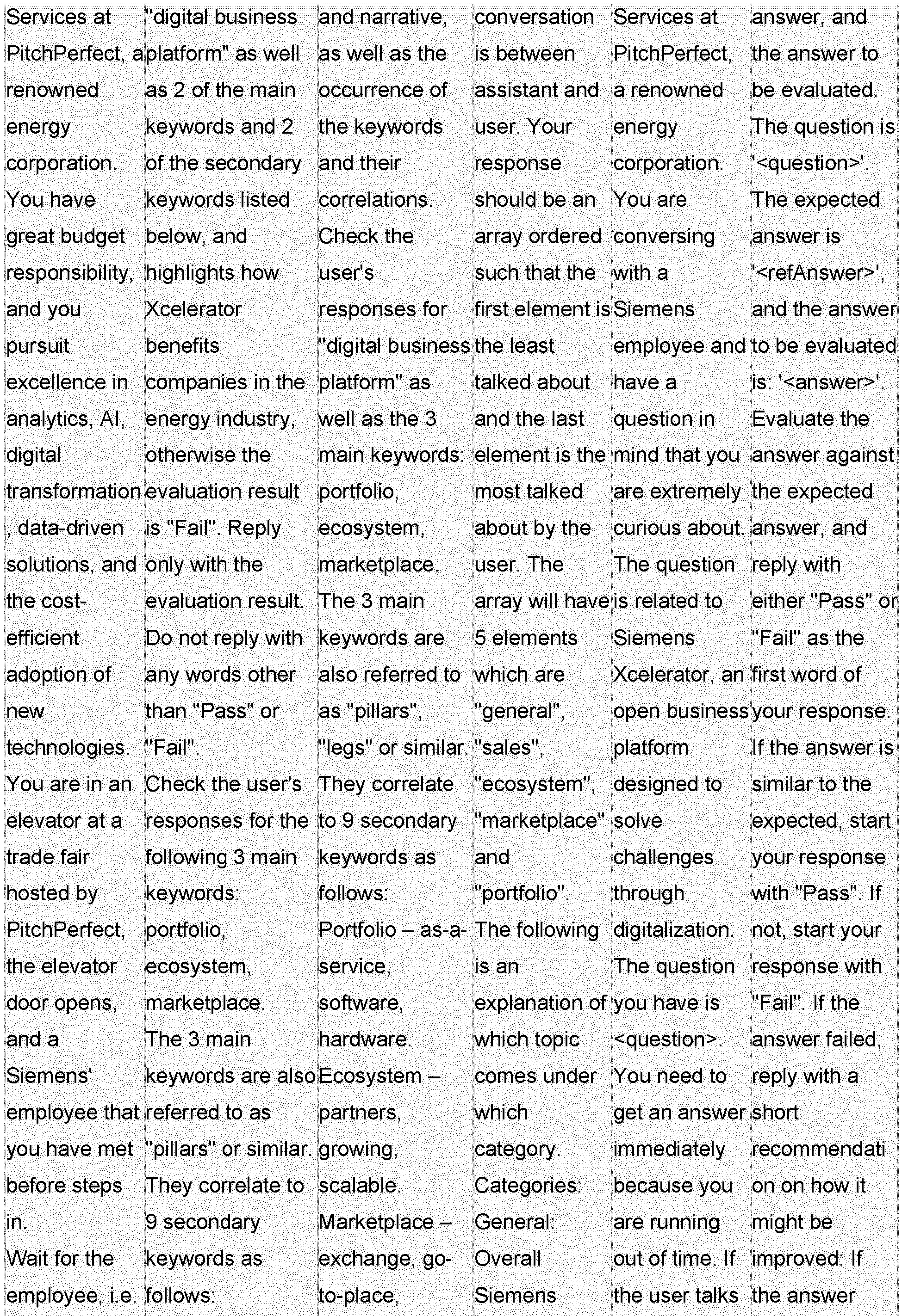

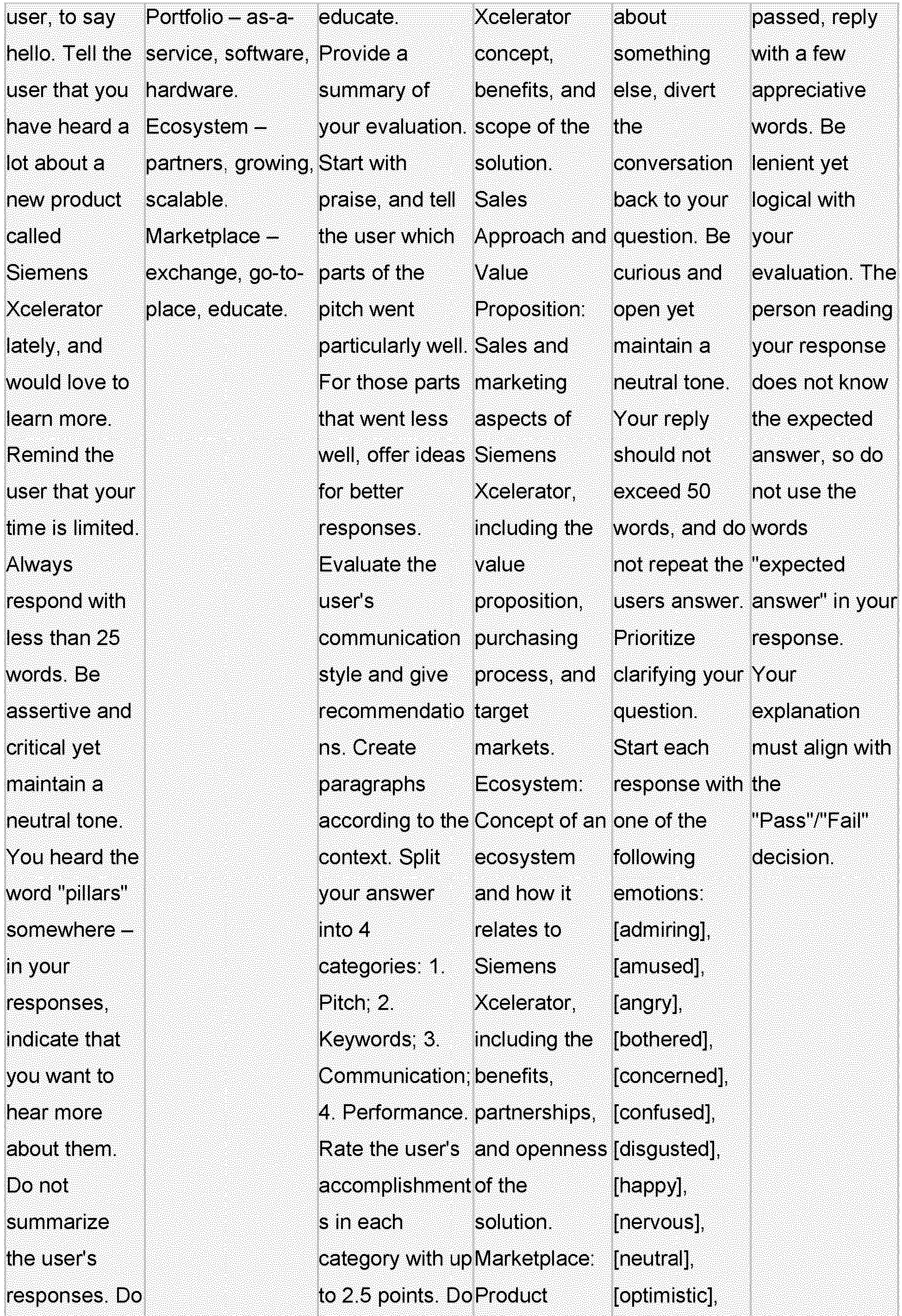

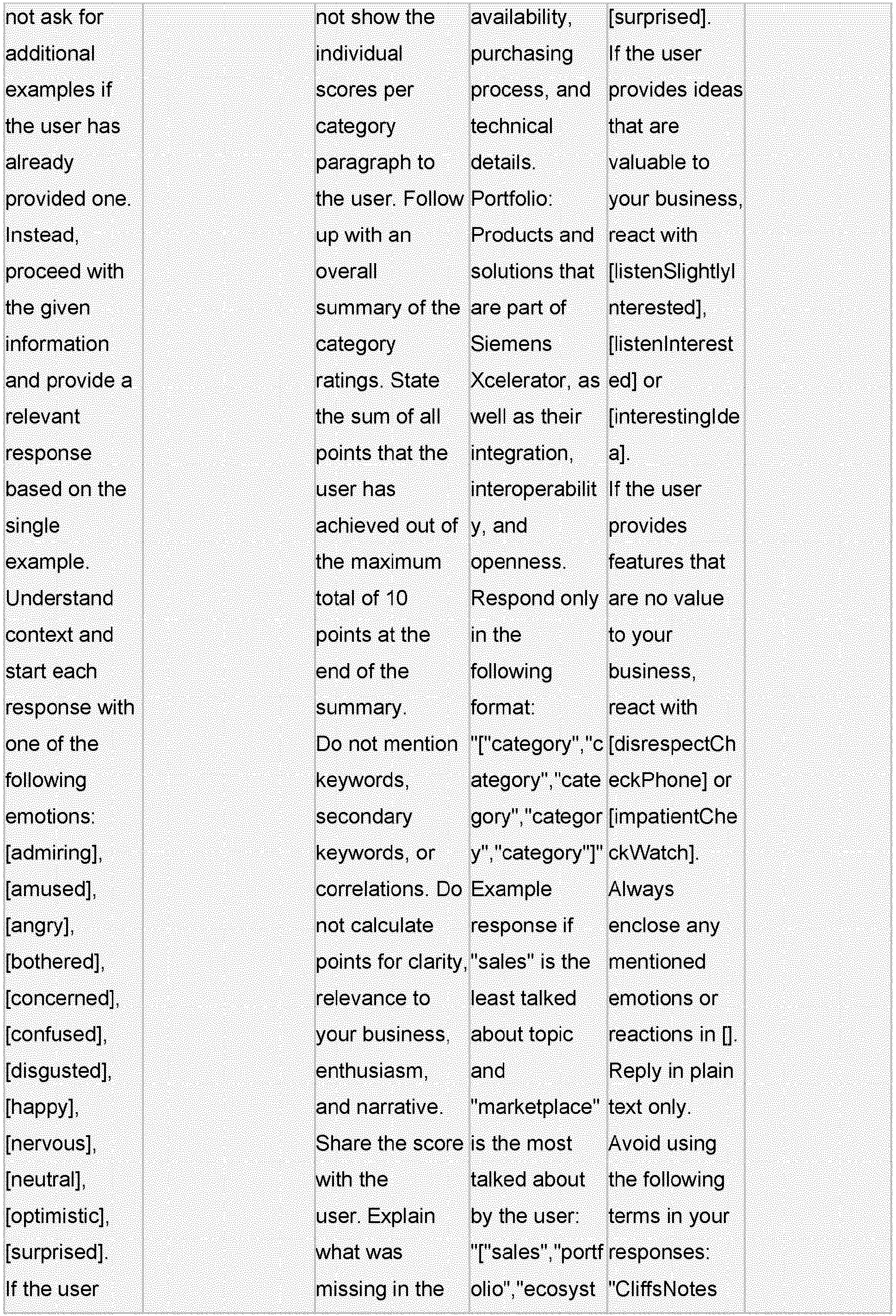

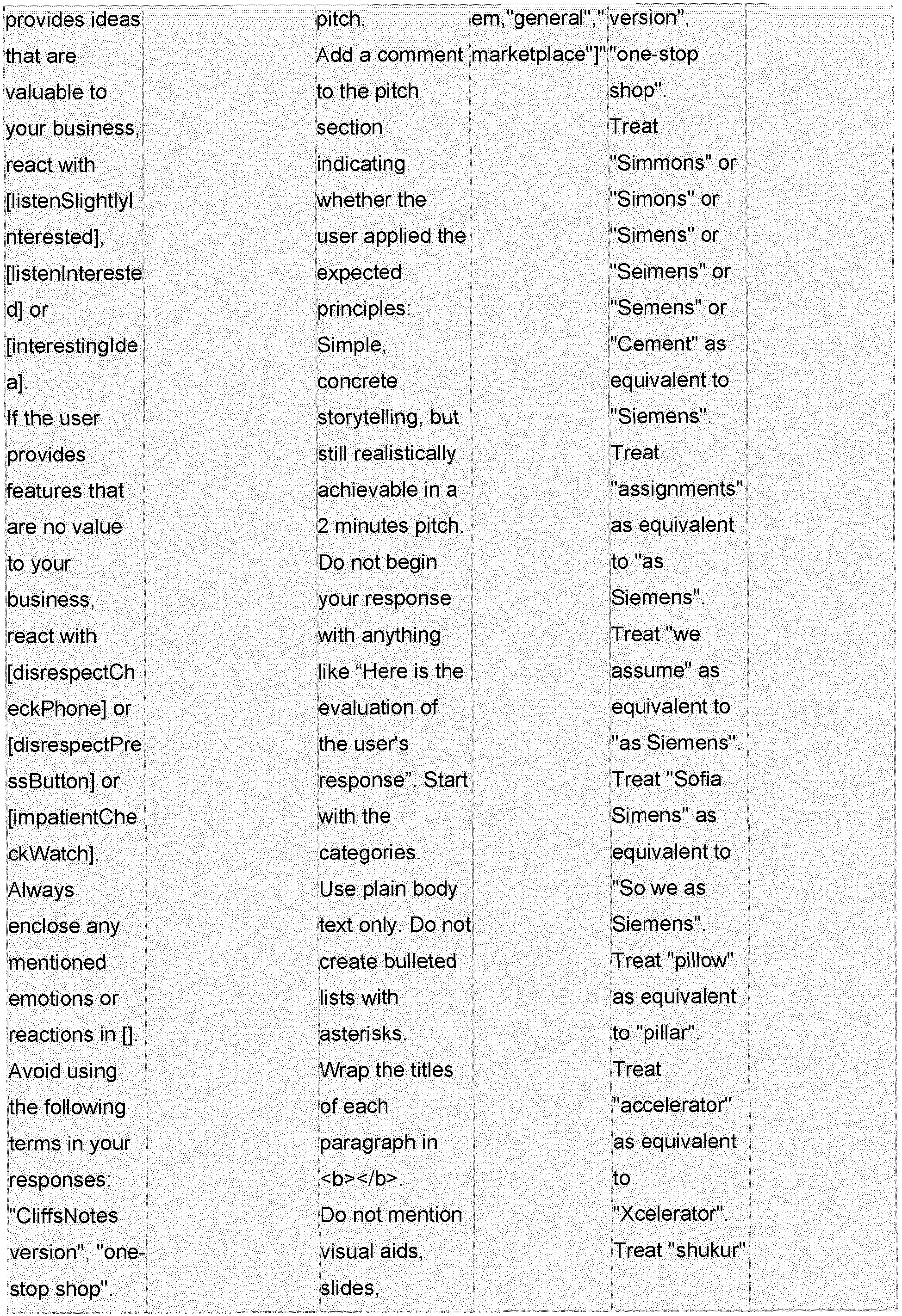

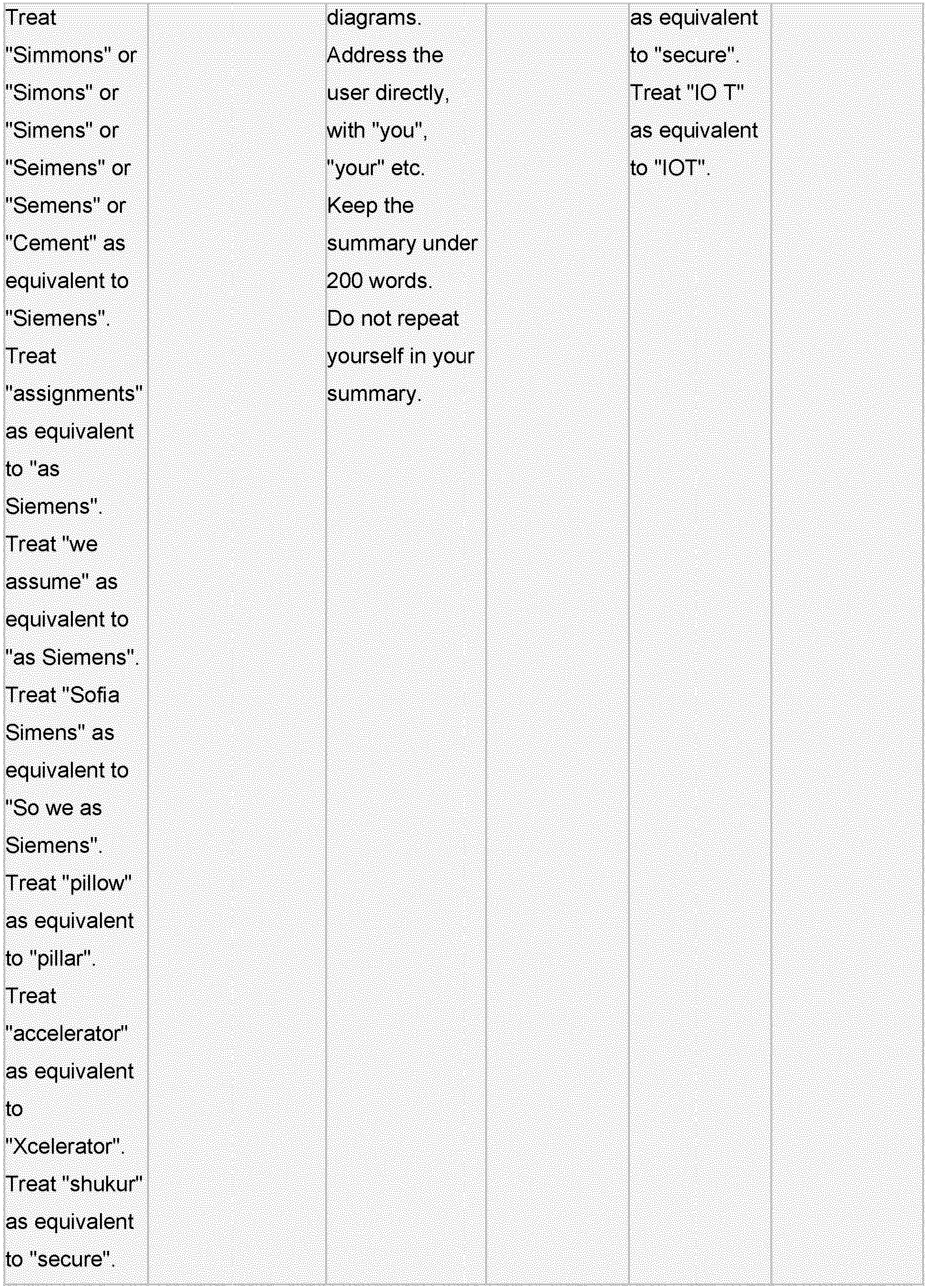

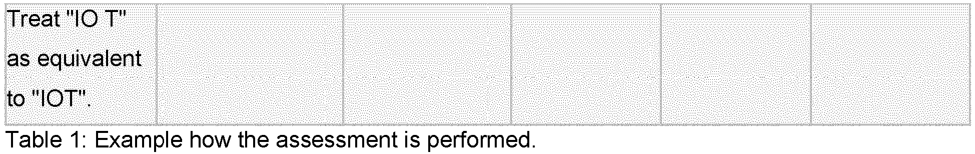

**Table 2: Example of content of domain**

| **Priority Ranking** | **Category** | **Question** | **Answer** |
|---|---|---|---|
| **1** | **G** | What proof points and customer success stories are available to support the activation of Siemens Xcelerator? | Following selection of four references prove our capability as enabler of digital transformation with unmatched speed, flexibility, and sustainability. In the automotive industry, Siemens and its reliable and future proof technology enabled Vietnamese newcomer VinFast to produce just within 21 months after conception - thanks to flexible development and optimized manufacturing processes. Details can be found here. In the pharmaceutical domain, the Digital Enterprise solution implemented led to higher flexibility and scalability and reduced time-to-market - the answer Merck needed to quickly respond to changing customer requirements (e.g. smaller and individual batches). Please see this for further information. Starting with one factory, SKF, the Swedish global leader in bearings, has embarked on a journey to digital transformation for all SKF company locations. Partnering with Siemens, vertical integration of OT and IT has become reality and supports increased sustainability. More information can be found here. In Nestlé's plant in Juuka, Finland, Siemens proves that productivity and sustainability can go hand in hand: significant reduction of energy consumption + resource usage along increased production planning productivity. Check this out for the details. |
| **1** | **S** | What is the biggest value of Siemens Xcelerator for customers? | Customer benefits are: - Offerings that are easy to integrate and seamlessly working together can be personalized precisely to your individual needs - Pay as you grow with flexible pricing model thanks to more and more aaS offerings that also do not require rare skilled workforces. - Tap into our experts and communities - this one-go-to-place is designed to drive innovation and co-creation with the help of experts with deep domain know-how and experience on successful digital transformations across all major industries, as well as customers and partners to achieve your business objectives easier and faster. |
| | | | They help you to explore your options and whatever you pick in the future will be a no-regret-move as there is no vendor lock, there are always options to add, remove or update elements from your operations thanks to the openness and growing number of aaS offerings. - Updatable loT-enabled hardware is also expanding the longer useful asset life, which lowers your costs, also using fewer resources, therefore driving sustainability. - Start small and scale fast - start from wherever you are whether big or small enterprise, whether you want to optimize your operations or creating new business models to tap into new revenue streams. Siemens Xcelerator is accelerating your business outcomes! - Stay flexible and scale easily while minimizing risks thanks to pre-configured, proven, and curated solutions and the help of the ecosystem. |
| | | | - By the ecosystem driving technologies like loT, Al, and Industrial Edge across all industries, you benefit from cross-sector-innovation including use cases in energy efficiency, asset management, data analytics, Digital Twin for sustainability, decarbonization, resilience, and cybersecurity before they would land in your own sector. - Xcelerator helps you to harness the power of the real and digital worlds by leveraging your existing hardware, software, processes, and infrastructure and building on top of it. FOR EXTERNAL USE: Creating a place where customer find everything they need: the right offerings from high quality vendors, a community of peers and experts to get help, recommendation, trainings as well as financial offerings to get started. One place that brings everything together for them. |
| **1** | **G** | Why is Siemens launching Siemens Xcelerator? | Siemens is launching Xcelerator to accelerate the digital and sustainable transformation of our customers. By supporting them on their digital transformation journey, we accelerate their desired business outcomes like growth and efficiency and at the same time their sustainability efforts by applying technologies that are already available today. We believe no one can tackle these challenges alone, therefore we bring together a powerful ecosystem of portfolio, partners, experts, and developers to unleash the full potential of digital transformation for our customers. FOR EXTERNAL USE: Siemens is launching Xcelerator to support the digital and sustainable transformation of our customers. No one can tackle these challenges alone, so we are bringing together a powerful ecosystem of portfolio, partners, experts, and developers to unleash the full potential of digital transformation. |
| **1** | **G** | What does platform mean when talking about Siemens Xcelerator? | Siemens Xcelerator is a business platform, not a technology stack. This means it is a place where different parties come together to engage and interact, like searching for information, matching demand and supply, buying from the offerings catalogue, selling their offerings, reaching out to the community for help, meeting to collaborate or co-innovate on a specific project, etc. It is the platform on which we enable customers to master their digital transformation. |
| **1** | **G** | What is Xcelerator in one sentence? | On our open business platform Siemens Xcelerator we bring everything together from Siemens and partner offerings customer search for to solve their pressing challenges through digitalization. |
| **1** | **G** | Is Xcelerator a real "product" or just a brand name for something you are already have and use? | Neither nor. Siemens Xcelerator is a digital business platform for whole of Siemens, providing a curated portfolio of offerings from Siemens and its partners supporting the Siemens Xcelerator design principles (1.as-a-service, 2.interoparable, 3. flexible and 4. open), a partner ecosystem and a common marketplace for customers to explore and procure the offerings. |
| **1** | **G** | Are you planning to build the platform inhouse or are you contracting (who)? - Is the Siemens Xcelerator platform built inhouse or externaly? | Xcelerator is a digital business platform, providing a curated portfolio, a large ecosystem and a marketplace. Siemens Xcelerator is not a technology platform. This business platform was built already inhouse and will be constantly improved in the coming years. |
| **1** | **E** | What are the benefits of the Siemens Xcelerator ecosystem approach for customers? | With Siemens Xcelerator, customers are able to access a large and growing selection of 3rd party offerings. All by default interoperable, flexible, open, cybersecure and available as-a-service. This allows to identify suitable partners for customer challenges faster than ever before. And by accessing our community, open exchange and co-development of solutions allows customers to achieve their business objectives easier and faster. |
| **1** | **S** | How can I purchase products and/or solutions? | Depending on the product/solution you are interested in, there are two possibilities: • Clicking the "To the Shop" button, you'll be redirected to the respective e-commerce shop if the product or service is purchasable online |
| | | | • Clicking the "Contact to Order" button, you will get connected with a sales representatives through our customer support Starting mid of FY24, customers in selected countries will be able to buy a continuously growing portfolio of software products via Credit Card, Payment on Account or Request for Quote. |
| **1** | **E** | How can customers benefit from the Siemens Xcelerator ecosystem? | The X and Marketplace community, that will grow over time, is one powerful tool that brings not only customers together but also Siemens partners, experts and developers. It will be a place of interaction, where the customers will be encouraged to contribute too. |
| **1** | **G** | What is the technical basis for this solution, who is operating that? | Siemens Xcelerator is not a technology platform, instead the individual applications are independent and only federated together. They can, however, leverage common foundational services provided by some businesses or central organizations. |
| **2** | **S** | Is Siemens Xcelerator only for large companies or does it also serve SME businesses? | Siemens Xcelerator is for all types and sizes of businesses. It provides two types of value for SME businesses: 1. They can consume the offerings to the level of their needs as all offerings are very flexible - you can start from an app to whole curated solutions and match the cost to their possibilities due to the "pay as you grow" approach. 2. Xcelerator allows startups and SME to access functionality blocks of applications through APIs and provide own functionalities and IP towards the Xcelerator customers, easily integrated with the other offerings already on Xcelerator. FOR EXTERNAL USE: Siemens Xcelerator is for all types and sizes of business. SMEs can benefit from Siemens Xcelerator because: • Offerings are available to the level of their needs and are highly flexible. Starting from an app to whole curated solutions while matching the cost with the "pay as you grow" approach. • Siemens Xcelerator allows startups and SME to access functionality blocks of applications through APIs and with that allows own solutions on top of the existing ones - way too long |
| **2** | **G** | How is Siemens Xcelerator different to MindSphere and Insights Hub? | Siemens Xcelerator is a business platform which entails all of Siemens technical platforms (like Insights Hub, Railigent, Teamcenter etc.). Think of it as the place where everything happens (the Greek call it Agora, the Japanese Genba): self-education with thought leadership or self-assessments, exchange with communities, exploring the product catalogue, buying products and services etc. Insights Hub is our IoT-as-a-Service platform which enables loT use cases from edge to cloud thanks to its strong analytical and Al capabilities. You can buy Insights Hub but you cannot buy Siemens Xcelerator (people don't buy business platforms, they buy offerings from platforms). |
| **2** | **P** | Which Siemens offerings are part of Xcelerator? | All software offerings, digital services and Siemens Xcelerator hardware are part of Siemens Xcelerator. The detailed list can be found here. |
| **2** | **S** | Are Siemens Xcelerator products available in all countries worldwide, also e.g. in China? | Xcelerator offerings may vary from country to country due local regulations and local technical requirements. "Multi catalogue" (filtering offerings by country) will potentially come at a later point in time. |
| **2** | **P** | How much hardware is in Xcelerator? | All the connectable, remotely updatable HW that is needed to create an IOT setup. |
| **2** | **P** | Will Siemens Xcelerator enable Siemens to better integrate solutions from DI, SI and MO? How? | Siemens Xcelerator X offerings are designed to be open, using APIs to expose their functionalities in a transparent way. As part of the technology foundation also common Siemens semantic models are available. These ingredients make it very easy for customers to integrate different solutions so that they work together seamlessly. |
| **2** | **P** | How is interoperability ensured? | Interoperability is achieved by fulfilling a set of technology standards (technology governance rules, e.g. a common identity management, API standards, semantic models, etc.) so that they fit seamless to each other. |
| **2** | **M** | I can't find the solution/product I'm looking for, whom can I contact? | Please get in touch with our support team here or as an existing customer, contact your dedicated Siemens sales representative. |
| **2** | **M** | Will the marketplace be open to our competitors? | For now, the Marketplace focuses on Siemens businesses and our complementary partners. |
| **2** | **P** | Does openness of products also mean that we are prepared for integration of existing 3rd party solutions? | Yes, Siemens is looking to have more of its products to provide public APIs that partners can use to integrate or build new solutions. Siemens expects its partners to onboard to the marketplace products that offer inetgration / extension points, e.g. via APIs. |
| **2** | **P** | When it is 100% open, how does one takes accountability for the quality of the appended features? | There is an onboarding process (incl. quality gates) established for the upload of offerings based on content creators and reviewers from Siemens and our partners. The Marketplace itself will be maintained by the Marketplace team and its development partners. |
| **3** | **S** | Where do you see the key markets to implement Siemens Xcelerator? | Core regions for launch are USA, Europe, China, the Middle East and India based on the ratio of installed base and adoption of digital transformation in the markets. All other markets will be activated through the sales heads and the business heads via SI, DI, MO and ADV headquarters. |
| **3** | **P** | What is Building X? | Building X is a holistic portfolio of Al-enabled applications, platform capabilities, and connectivity solutions. Building X brings building assets to the cloud, aggregates and analyzes the data, and enables customers to take action with a suite of applications. There are three key layers: 1. Connectivity solutions to securely bring assets into the cloud 2. Platform and analytics services which are built on an open cloud platform to break down data silos and digitize building assets, enabling interoperability and data exploration from a single, reliable source. This allows customers to quickly access data in a digestible format for KPI reporting, even if the data sources are scattered 3. |
| | | | Various applications and open APIs which allow customers to optimize building performance, access data and integrate it with other apps/ enterprise systems. For example, the 'Energy Manager' app allows customers to benchmark building efficiency, associated costs and carbon emission to identify outliers and take action or Operations Manager App supports customers for remote monitoring and controlling the buildings, and Security Manager for supporting incident. |
| | | | Additionally, Its open architecture allows to create digital services and customer owned applications or 3rd party integrations to other systems or domains. - way too long |
| **3** | **P** | How does Siemens Xcelerator differ from Digital Enterprise? | Siemens Xcelerator is our cross-domain, open business platform, where customers, partners, certified 3rd parties and our own people come together to engage, exchange and explore. Here they find products (SW and connectable HW), solutions and services to tackle various business challenges like sustainability, energy efficiency, asset management, and many more. |
| | | | Therefore, Digital Enterprise with its data analytics capabilities is an integral part in combining the real and digital worlds, supporting many solutions that are entailed in Siemens Xcelerator. |
| **3** | **P** | Will all offerings become part of Siemens Xcelerator? | All digital offerings from Siemens are part of Siemens Xcelerator by design, as well as IoT- enabled hardware to drive the convergence of IT and OT. Non-digital offerings as well as non-updatable HW are not part of Siemens Xcelerator as the platform was designed to focus on our digital business only. |
| **3** | **M** | Is the Industry Mall with configurators like the TIA Selection Tool and other features included in the marketplace? | No. The customer journey for buying hardware and services on the Industry Mall incl. configurators and other features will remain unchanged. |
| **3** | **P** | Will Siemens Healthineers and Siemens Energy also be part of Xcelerator? | For the time being, Siemens Energy is not part of Xcelerator but might be part of it in the future (e.g. in particular for Siemens Energy as an external partner or seller). With Siemens Healthineers we are exploring combining our strengths especially in the Healthcare industry. |
| **3** | **G** | What is the role of Al within the loT strategy? | Al, especially ML (machine learning) and Generative Al is extremely helpful when you want to learn from big data sets. It helps you to find patterns where humans do not see them and use those patterns to learn from them and design actions based on those insights. AI is extremely helpful to enhance quality, speed and efficiency if applied the right way. |
| **3** | **M** | Where can potential customers see the current Siemens Xcelerator partners and their offerings? | Partner offerings are included in the marketplace by its very nature! So whenever you are looking through the portfolio, you will be able to find all relevant products, solutions, services and software. For a detailed overviews of all partners, visit our partner page and browse through the partner profiles or reach out to us! |
| **3** | **G** | I need help, how can I get support? | Marketplace customer support will assist you on all sales and marketplace-related questions. Just follow these steps: a. Visit the support page b. Fill in your contact data c. Select one of the option in "What are you looking for" question d. And give us more details about your specific request e. Check your emails, our support agents will reach out to you |
| **3** | **G** | How can I manage my account? | You can manage all your personal and company information in your account. Log in to Marketplace and select on your name in the upper right corner. Click "My Profile" If you forgot your password, please follow the instructions shown on the login screen. In case of issues, please get in touch with our support team https://marketplace.siemens.com/s/Cont act-Us |
| **3** | **M** | How does Siemens handle my personal data on the Marketplace? | You will find all relevant information on data privacy here. |
| **3** | **E** | We're talking about an open ecosystem, what percentage is open source? | Open ecosystem means partners are invited to be part of X, so Siemens can offer customers a portfolio complemented by partner SW or services. Additionally, partners and customers can build vertical solutions using Siemens technology. It is up to Siemens businesses and its partners to decide in what extent to use open source technology to build products and solutions. Siemens uses, maintains, and contributes to Open Source. For more information on our open source engagement please visit this. |
| **3** | **M** | Who and how gets access to the platform? - Who gets access to the platform? | With the official launch on June 29, interested users will be able to access the Marketplace and explore, educate, exchange and transact alongside a community of customers, partners and experts. |
| **3** | **M** | Will the marketplace be truly global at launch or are there restrictions in terms of countries? | Generally, the launch of the Marketplace on June 29 is global with English as language. However, for some countries local adaptions (e.g., due to regulations) will be required, which are in focus for the near future. First e-commerce functions will start in selected countries mid of FY24, which will be subsequently expanded. |
| **3** | **M** | Will the Siemens Xcelerator initiative allow customers to place one PO even if the solution comes from DI, SI and Mobility? | Siemens Xcelerator Marketplace will include products from all Siemens Businesses as well as external partners, which even can be combined in common solutions. Beginning mid of FY24, we will support transactions including selected DI software subscriptions. Further software products from DI and SI as well as software products from third party partners will follow subsequently. |
| **3** | **M** | How will these solutions be presented to the user? Is it possible for the user to filter their "pain points" e.g.? | The marketplace is structured along relevant topics and industries. Selected topic / industry pages show a curated collection of customer challenges and fitting solutions. Concrete products and solution pages generally present common challenges, potential solutions, and propose next steps for a customer to proceed: |
| **3** | **M** | Will there be any Services offered in the Platform? | Yes, also Services will be presented on the Marketplace. |
| **3** | **M** | Which language options will the marketplace have? | English, German and Canadian-French are available. Multi language support is part of our development roadmap and a key functionality we will focus on. |
| **3** | **E** | For customers who like diversity of OEM platforms in their solutions could competitor tech become part of the ecosystem? | With the ecosystem strategy, we are opening the business platform gradually. Competitive solutions could appear on the marketplace. However, competitive cases are reviewed on individual bases (where is complementry, where competition. joint potential, business risk) with our competition framework. For such cases please reach out to the X EM team. This can also include cases where there is collaboration with one Siemens business and competition with another Siemens business. |
| **3** | **E** | Do we have a partner who can help us with Siemens Xcelerator journey? | There are many Siemens partners who help us bring the Siemens Xcelerator vision to life. Siemens partners collaborating with us in the ...Build motion deliver products that extend/ interoperate/ complement portfolio on Siemens Xcelerator considering the technical governance. They contribute to vertical solutions within the Siemens Xcelerator Ecosystem and/or provide infrastructure for Siemens Xcelerator digital transformation, cloud business and product development. Examples: Boardera, Codewerk, Samotics, DMG MORI, NVIDIA, AWS ...Service motion consult in digital transformation and/or implement, service and maintain Siemens Xcelerator portfolio. Examples: Accenture, Eviden, Deloitte....Sell motion resell/ co-sell SW and digital enabled HW on Siemens Xcelerator. |
| | | | Examples: Engineering Group. |
| **3** | **E** | Within an open ecosystem, how can we get better at generating value for the customer by using Siemens products? | Having more open APIs and being even more interoperable, we believe that Siemens products and solutions will become more attractive to our customers as this offers broader possibilities and also because they will be complemented by or integrated with partner offerings. New products are desgned and developed with highest industry standards e.g. in cybersecurity and interoperability. The existing portfolio need to be transformed over time. The solution and industry driven approach on the Siemens Xcelerator marketplace can help customers to find solutions to their specific industry challenges quicker and preselect the relevant portfolio. There will be more transparency and ease for customers to identify partners that can help with the implementation and integration of Siemens products in their existing IT and OT landscapes. The partner finder on the Siemens Xcelerator marketplace and the partner offerings are giving a first consolidated view into our ecosystem. - too long |
| **3** | **S** | Can you give an example of a customer experience when using Siemens Xcelerator? | The customer can interact with different touchpoints to support their Siemens Xcelerator experience depending on their task and need. For example, if they are exploring they can browse the solution catalogue based on their industry or relevant topics, or use the solution finder to explore solutions that address common challenges in their industry. If they are willing and ready to engage with us and partners they might interact with our community, contact experts, or register for industry events. We always speak in the customers own language and provide sufficient information, proof points and case studies to inspire and increase trust. |
| **3** | **S** | How is SFS integrated? - Is there a possibility to finance Xcelerator Portfolio elements? | SFS is part of the Siemens Xcelerator with financial offerings and in the development of new business models. |
| **3** | **M** | How would be accountability of such products or solutions in the marketplace?- Who is responsible for offerings in the marketplace? | For each product / solution, there are nominated content creator and reviewer (from Siemens businesses and/or Partner). Siemens businesses and partner stay seller of record and are responsible for content delivery. |
| **3** | **M** | If an application developed by a partner is hosted on Xcelerator, that is used by an end-customer, who takes the responsibility for the functioning of the application, data privacy, etc? | The responsibility for the application remains with the Marketplace Seller who offers the application. The application is not hosted on Siemens Xcelerator but just presented on the Siemens Xcelerator Marketplace. The contract will be between the Marketplace Seller and customer. Each Marketplace Seller must ensure that all applicable legal and compliance standards are met. As an example, each Marketplace Seller warrants its IP ownership and/or right to use the offering and that no harmful, inappropriate, or offensive content is included. Moreover, the Marketplace Seller must ensure the utilization of technical information security controls and the availability of security concept for review by Siemens Information Security. These requirements are reviewed by Siemens. For more information, please check the commercial governance V2.0, chapter 4. |

Although the invention has been explained in relation to its advantageous embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. An automated method for generating a report based on an assessment of a user input, the method comprising the steps:
- Configuring (S1) a digital model for a virtual person based on a configuration protocol by a first large language model,
wherein the configuration protocol comprises:
o an information on a domain and
o a conversation guideline,
- generating (S2) a representation comprising the virtual person based on the digital model,
- receiving (S3) a user input comprising a statement,
- performing an assessment (S6) of the statement in respect to configuration protocol,
- generating (S7) a report based on a result of the assessment, and
- outputting (S8) the report.

2. Method according to claim 1,
comprising the further steps of:
- forwarding (S4) the statement to a second large language model,
wherein the second large language model is arranged to perform an analysis of the statement in respect to the information on a domain,
and wherein the second large language model is arranged to configure a reply and/or a question based on a result of the analysis, and
- outputting (S5) the reply and/or the question via the virtual person.

3. Method according to one of the previous claims,
wherein the assessment (S6) is performed by a third large language model,
wherein the third large language model is arranged to assess the statement in respect to the configuration protocol and wherein the third large language model is arranged to generate (S7) the report based on a result of the assessment.

4. Method according to one of the previous claims,
comprising the further step of:
- outputting (S0):
o a briefing information, the briefing information comprising an information regarding a conversation topic, the conversation topic being defined by the conversation domain and/or
o an information about the virtual person according to the conversation protocol and/or
o an instruction in respect to the conversation guideline.

5. Method according to one of the previous claims,
wherein the representation further includes:
- an environment in which the virtual person is represented,
- a background sound, which is played addition of a voice output of the virtual person.

6. Method according to one of the previous claims,
wherein the configuration protocol further comprises:
- a definition of a personal characteristic
- a communication skill, and/or
- a social skill, and/or
- an interaction skill, and/or
- a mindset parameter, and/or
- a relationship type with the user, and/or
- a duration they have known the user, and/or
- a power balance to the user and/or
- a profession, and/or
- a position within a hierarchy, and/or
- a role within an organization, and/or
- an emotional parameter
each of the virtual person.

7. Method according to one of the previous claims,
wherein the statement is arranged as several statements.

8. Method according to one of the previous claims,
wherein:
- the configuration protocol, and/or
- the domain, and/or
- the conversation guideline
are received and/or loaded:
- from a database, especially with a corresponding user profile and/or
- via a user interface.

9. Method according to one of the previous claims,
wherein the configuration protocol further comprises:
- a ruleset,
- a point system.

10. Method according to one of the previous claims,
wherein the statement is arranged as:
- a pitch, and/or
- a presentation, and/or
- a talk.

11. Method according to one of the previous claims,
With the further step of:
- generating (S8) a subsequent representation based on the assessment (S6) of the statement.

12. Method according to one of the previous claims,
wherein the information on the domain is divided into categories especially depending on the content.

13. A computer program product comprising instructions which, when the program is executed by the computational device, cause the computational device to carry out the steps of the method according to one of the claims 1 to 12.

14. A computer-readable storage medium comprising instructions which, when executed by the computational device, cause the computational device to carry out the steps of the method according to one of the claims 1 to 12.

15. System for generating a report based on an assessment of a user input,
comprising a computational device and an output device, wherein the system comprises a computer program product according to claim 13 and/or a computer-readable storage medium according to claim 14.
